# EUROPEAN PATENT APPLICATION

(11) **EP 0 590 478 A2**
(43) Date of publication of application: **06.04.1994**
(21) Application number: 93115195.5
(22) Date of filing: 21.09.1993
(51) Int. Cl.: G01V 1/28, H01H 35/02

(54) **Inclination/vibration detecting switch**

(71) Applicant: Nakajima, Fumio, Saitama, 355 (JP)
(72) Inventor: Nakajima, Fumio, Saitama, 355 (JP)
(74) Representative: Strehl Schübel-Hopf Groening & Partner

(57) **Abstract**

An inclination/vibration detecting switch comprises a first electrode (11), a second electrode (13) mounted to said first electrode and having a projection (13A) formed thereon, and an insulating member (12) mounted to insulate said first and second electrodes from each other. A conductive movable member (15) is contained within a housing which is comprised of said first and second electrodes (11, 13) and said insulating member (12) . The projection (13A) formed on the second electrode (13) has a concave surface (13A1) upon which the conductive movable member (15) rests in a normal OFF state of the switch. If a vertical or horizontal vibration is applied to the switch or the switch is inclined or tilted, the conductive movable member (15) is brought into contact with the first electrode (11) so that the switch is turned ON, whereby the inclination or the vibration can be detected.

## Description

### BACKGROUND OF THE INVENTION

### FIELD OF THE INVENTION

The present invention relates to an inclination/vibration-detectable switch, and more specifically, to an inclination/vibration-detectable switch capable of detecting the inclination and the vibration for use infields of house-service appliances, toys, precision machines and industrial machines.

### DESCRIPTION OF THE PRIOR ART

A kind of the inclination/vibration-detectable switches developed hitherto and commonly used include those of a mechanical type (for example, see Japanese Patent Appliction Laid, open Nos. 1979-21786, 1983-113725 and 1984-224526) or using mercury (for example, see Japanese Patent Appliction Laid, open No. 1984-224526).

However, A kind of the prior art inclination/vibration-detectable switchs of the mechanical type such as a spring type are accompanied by following problems:
(1) The inclination can be detected and moreover, if it has been used for a long period of time, the resilient force is lost and hence, the switch is liable to be brought into an ON state.
(2) The sensitiveness to operation cannot be adjusted.
(3) If the sensitiveness is higher, the external dimension is larger.
(4) 0 e vibration at a low speed cannot be detected.
(5) The switch cannot be operated at all when in a tilted or inclined state.
(6) To assemble the switch into a appliance or a machine, a soldering to a fitment or a lead wire is required and hence, it is impossible to mount the switch by an automated soldering.
(7) Many parts are used, resulting in an increased cost.
(8) A spring and a balance-weight are gradually reduced in their functions, as they are used for longer period of time.

On the other hand, the prior art inclination/vibration-detectable switchsh using the mercury are accompanied by following problems:
(1) The switch is liable to be mis-operated due to an expansion of the mercury caused by a variation in temperature.
(2) When a very small vibration is applied to the switch, the latter cannot be operated, resulting in a low sensitiveness to operation.
(3) Since the switch is produced manually, a mass production thereof is difficult.
(4) Since the mercury is used, the breakage of the switch is attended with a danger to a human body and also causes an environmental pollution, thereby bringing about a social problem.
(5) The vibration at a low speed cannot be detected.
(6) A soldering to a lead wire is required for mounting of the switch and hence, it is impossible to mount the switch by an automated soldering.
(7) Since the mercury and a glass are used, the switch is expense to produce.
(8) Since the mercury and the glass are used, the switch is liable to be broken.
(9) It is difficult to reduce the size of the switch.

Accordingly, it is an object of the present invention to provide an inclination/vibration-detectable switch capable of detecting the inclination and the vibration for use in fields of, for example, burglarproof devices, toys, game machines, measuring instruments, detector devices for detecting the vibration of industrial machines, accessories, detector devices for detecting the lateral turning of domestic articles, hobby goods, security devices, house-service appliances, and industrial instruments.

### SUMMARY OF THE INVENTION

To achieve the above object, according to the present invention, there is provided an inclination/vibration-detectable switch comprising a first electrode, a second electrode mounted to the first electrode and having a projecting formed thereon, an insulating member mounted to insulate the first and second electrodes from each other, and a conductive movable member contained within a housing which is comprised of the first and second electrodes. The projection may be formed to have a concave or convex surface.

With the above construction, when the conductive movable member is placed on the concave surface of the projection formed on the second electrode, it is not in contact with the first electrode, and therefore, the switch is in an OFF state. If a vibration is applied vertically or horizontally to the switch from the outside or the switch is inclined or tilted in such OFF state, the conductive movable member is brought into contact with the first electrode, so that the switch is turned ON, whereby the inclination or the vibration can be detected. On the other hand, in a condition in which the conductive movable member is in contact with the first electrode, the conductive movable member and the second electrode are not in contact with each other and hence, the switch is in the OFF state. If a vibration is applied vertically or horizontally to the switch from the outside or the switch is tilted or inclined in such OFF state, the conductive movable member is brought into contact with first electrode, so that the switch is turned ON, whereby the inclination or the vibration can be detected.

Thus, in the inclination/vibration-detectable according to the present invention, the inclination and the vibration can be detected and therefore, the switch can be produced with a reduced size and at a reduced cost to exhibit a significantly increased performance and reliability and can be used in wider ranges of applications.

The above and other objects, features and advantages of the invention will become apparent from a consideration of the following description of the preferred embodiments, taken in conjunction with the accompanying drawings.

### BRIEF DESCRIPTION OF THE DRAWINGS

Fig. 1 is a view illustrating an outer appearance of an inclination/vibration-detectable switch according to a first embodiment of the present invention, as being installed in a vertical position;
Fig. 2 is a schematic sectional view of the inclination/vibration-detectable switch when it is in an OFF state;
Fig. 3 is a schematic sectional view of the inclination/vibration-detectable switch when it is in an ON state;
Fig. 4 is a view illustrating an alternative embodiment to the inclination/vibration-detectable switch, as being installed in a horizontal position by turning it through 90 degree from the position shown in Fig. 1;
Fig. 5 is a schematic sectional view of the inclination/vibration-detectable switch when it is in an OFF state;
Fig. 6 is a schematic sectional view of the inclination/vibration- detectable switch when it is in an ON state;
Fig. 7 is a view illustrating an outer appearance of an inclination/vibration-detectable switch according to a second embodiment of the present invention;
Fig. 8 is a schematic sectional view of the inclination/vibration- detectable switch when it is in an OFF state; and
Fig. 9 is a schematic sectional view of the inclination/vibration-detectable switch when it is in an ON state.

### DESCRIPTION OF THE PREFERRED EMBODIMENTS

The present invention will now be described by way of preferred embodiments in connection with the accompanying drawings.

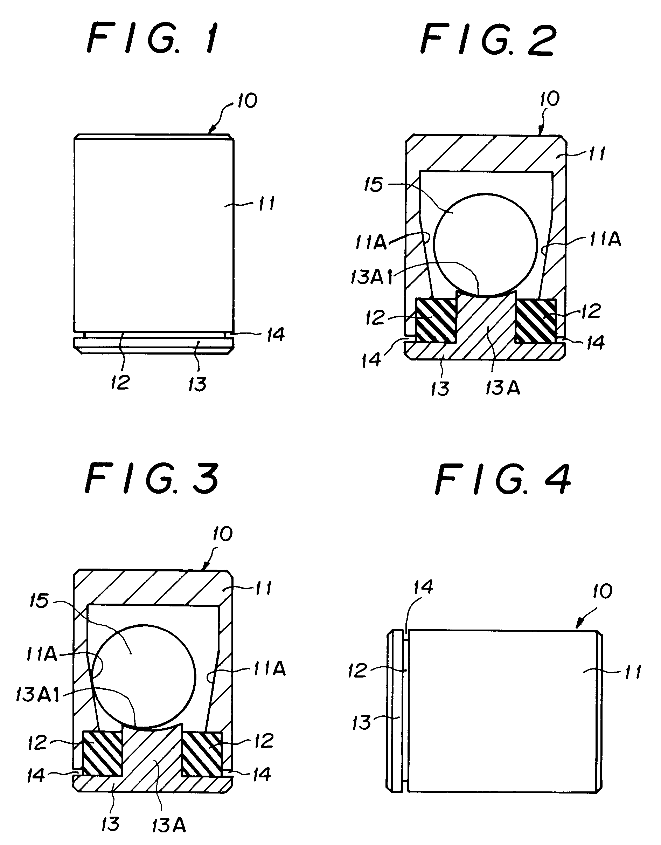

Referring to Figs. 1 to 3, an inclination/vibration-detectable switch of a first embodiment is shown by 10 as being installed in a vertical position. The inclination/vibration-detectable switch 10 includes a first electrode 11 which is formed into a housing-like configuration and which has an inclined surface 11A having an angle of inclination of about 10 degree. A ring-like insulating member 12 is mounted within the first electrode 11. A second electrode 13 is mounted to the insulating member 12 and has a projection 13A formed thereon. A concave rest portion 13A1 is formed on a top surface of the projection 13A and has an inclined surface with an angle of inclination of about 10 degree. The second electrode 13 is mounted, so that a gap 14 is provided between the first and second electrodes 11 and 13. Thus, the first and second electrodes 11 and 13 are not in contact with each other and hence, the first electrode 11 is not in electrical conduction to the second electrode 13.

A conductive movable member 15 is contained in a housing which is comprised of the first electrode 11, the insulating member 12 and the second electrode 13. The conductive movable member 15 may be comprised of a spherical bearing or the like.

In the first embodiment of the inclination/vibration-detectable switch having the above-described construction, when the conductive movable member 15 is placed on the concave rest portion 13A1 of the second electrode 13, it abuts against only the second electrode 13, but does not come into contact with the first electrode 11, as shown in Fig. 2. Therefore, the switch is in its OFF state, because electricity is not turned ON.

In such an OFF state, if a vibration is applied vertically or horizontally to the inclination/vibration-detactable switch 10 from the outside, or if the switch 10 is inclined or tilted, the conductive movable member 15 is moved to come into contact with even the first electrode 11, so that the switch is turned ON, whereby the inclination and vibration can be detected. In this case, the inclination and vibration in all directions can be detected, because the first and second electrodes 11 and 13 are columnar, and the entire switch 10 is formed into a columnar configuration.

In addition, since the inclined surface having the angle of inclination of about 10 degree is formed on the concave rest portion 13A1 of the second electrode 13, an unnecessary vibration can be absorbed. It should be noted that the angle of the inclined surface of the concave rest portion 13A1 of the second electrode 13 is of about 10 degree in this embodiment, but may be set at any value in correspondence to the magnitude of the vibration.

Alternatively, the inclination/vibration-detectable switch according to the present invention may be installed in a horizontal position by turning it through 90 ° from the position in the first embodiment, as shown in Figs. 4 to 6.

With the switch installed in such vertical position, in a condition in which the conductive movable member 15 is in contact with only the first electrode 11, it is not in contact with the second electrode and hence, the switch is in an OFF state, because electricity is not turned ON.

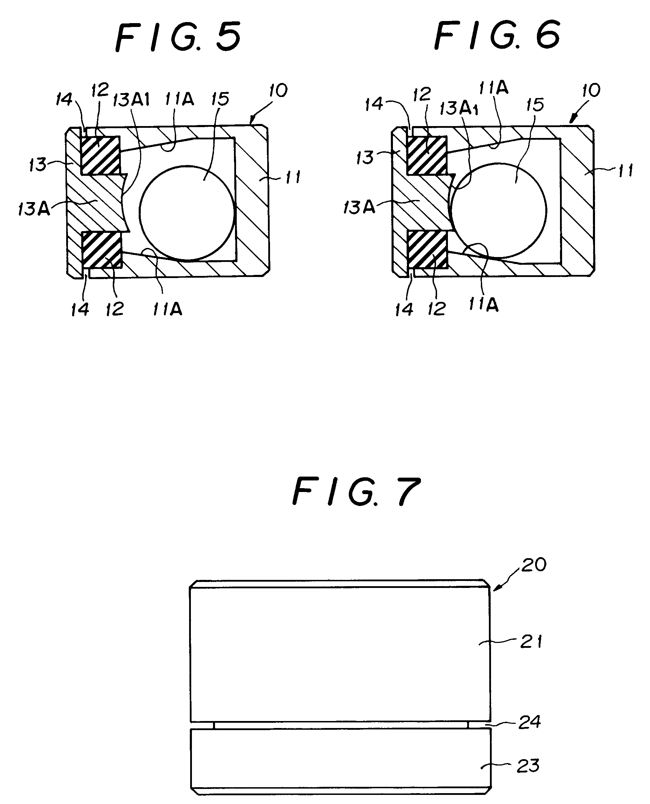

In such an OFF state, if a vibration is applied vertically or horizontally to the horizontally placed switch 10 from the outside, or if the switch 10 is inclined or tilted, the conductive movable member 15 is moved to come into contact with even the second electrode 13, as shown in Fig. 6, so that the switch is turned ON, whereby the inclination and vibration can be detected.

Even in this alternative embodiment, an unnecessary vibration can be absorbed.

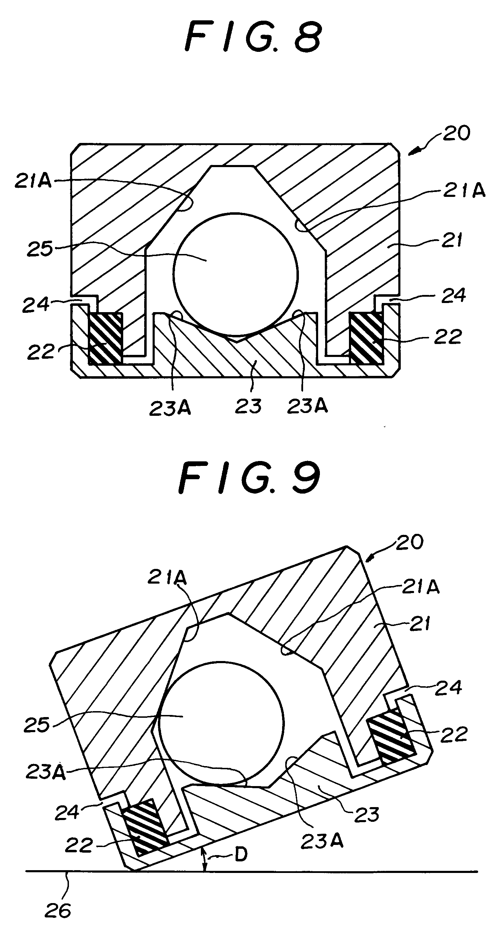

Referring to Figs. 7 to 9, an inclination/vibration-detectable switch of a second embodiment is shown by 20 as being installed in a vertical position. The inclination/vibration-detectable switch 20 includes a first electrode 21 which is forded into a housing-like configuration and which has an inclined surface 21A formed thereon with an angle in inclination of about 40 degree. A ring-like insulating member 22 is mounted to the first electrode 21, and a second electrode 23 is mounted to the insulating member 22 and has an inclined surface 23A formed thereon. The second electrode 23 is mounted, so that a gap 24 is provided between the first and second electrode 21 and 23. Thus, the first and second electrode 21 and 23 are not in abutment against each other and hence, not in electrical conduction to each other. Therefore, the switch 20 is in an OFF state, because electricity is not turned ON.

A conductive movable member 25 is contained within a housing which is comprised of the first electrode 21, the insulating member 22 and the second electrode 23. Reference numeral 26 designates a horizontal.

In the inclination/vibration-detectable switch 20 of the second embodiment having the above-described construction, the conductive movable member 25 is in abutment against only the inclined surface 23A formed on the second electrode 23, and hence, the first and second electrodes 21 and 23 are not in electrical conduction to each other. Therefore, the switch is in an OFF state.

In such an OFF state, if the inclination/vibration-detectable switch 20 is tilted until the angle 0 of inclination reaches about 20° , the conductive movable member 25 is moved to come into abutment against both of the inclined surface 21A of the first electrode 21 and the inclined surface 23A of the second electrode 23, so that the first electrode 21 and the second electrode 23 are brought into electrical conduction to each other, whereby the inclination can be detected In this case, the inclination in all directions can be detected, because the first and second electrodes 21 and 23 are columnar, and the entire switch 20 is formed into a columnar configuration. The angle D of inclination and the angle of inclination of the inclined surface 23A of the second electrode 23 may be adjusted or set at any value in a range of 5 to 90 ° , depending upon applications.

The inclination/vibration-detectable switch 20 according to the present invention has following advantages:
(1) If the housing is made of a metal, a resulting switch has a high strength.
(2) Since the ball bearing or the like is used for the conductive movable member, an inclination/vibration-detectable switch can be produced at a reduced size.
(3) Since any of a spring, a magnet and mercury is not used, an unstableness of operation and a danger to the human body due to a change with the passage of time can be overcome.
(4) Any common material can be used for the components and therefore, the cost of the inclination/vibration-detectable switch can be reduced.
(5) The inclination/vibration-detectable switch can be installed at any angle of inclination in any direction and moreover, can be turned from the ON state into the OFF state and vice versa, and therefore, the switch can be used in an extended range of applications.
(6) If the housing is formed from a plastic, and the conductive member is made of a conductive plastic, an inclination/vibration-detectable switch can be produced at a significantly reduced cost. In addition, if the housing is formed from a plastic, an inclination/vibration-detectable switch having a complicated shape can be produced, or a plurality of inclination/vibration-detectable switches can be produced simultaneously in a connected form.
(7) If the switch is connected in parallel, any of directions can be detected. On the other hand, if the switch is connected in series, a limited angle can be detected.
(8) The inclination/vibration-detectable switch according to the present invention has a high sensitiveness, as compared with the prior art inclination/vibration-detectable switch.
(9) Another sensor can be constructed by addition of another mechanism and/or another electric component.

Although the embodiments of the present invention have been described, it will be understood that the present invention is not limited to these embodiments, and various modifications and variations may be made without departing from the spirit and scope of the invention defined in claims. For example, the conductive movable member comprises the spherical bearing in the above-described embodiment, but may be shaped into a columnar or rectangular parallelepiped configuration. In addition, the inclined surfaces of the first and second electrodes are not limited to those in the embodiments, but may be formed so that they are suited for a sensitiveness corresponding to any of applications. In the inclination/vibration-detectable switch as set forth in claim 1, the projection formed on the second electrode may be formed to have a convex surface. In one modification, the inclination/vibration-detectable switch may comprises a first electrode, a second electrode mounted to the first electrode and having a projection formed thereon and having a concave surface, an insulating member mounted to insulate the first and second electrode from each other, and a plurality of conductive movable members contained in a housing which is comprised of the first and second electrodes and the insulating member. In another modification, the inclination/vibration-detectable switch may comprises a first electrode, a second electrode mounted to the first electrode and a projection having a convex surface, an insulating member mounted to insulate the first and second electrode from each other, a conductive movable member, and a liquid contained in a housing which is comprised of the first and second electrodes and the insulating member. In a further modification, the inclination/vibration -detectable switch may comprises a first mounting member, a second mounting member mounted to the first mounting member and having a projection formed thereon, a conductive member mounted to the first and second mounting members, and a conductive movable member contained in a housing which is comprised of the first and second mounting members and the conductive member. A member formed by monolithically molding a non-conductive plastic material and a conductive plastic material in a mold may be used for the first and second mounting members and the conductive member. The conductive member may be formed from a conductive plastic material. The projection on the mounting member may be formed to have a concave or convex surface. In a yet further modification, the inclination/vibration-detectable switch may includes an inclination-angle adjusting jig which comprises a conductive movable member having a angle-adjusting threaded bore made therein and an angle-adjusting screw threadedly inserted into the threaded bore, so that the angle of inclination of the inclination/vibration-detectable switch can be adjusted.

## Claims

1. An inclination/vibration detecting switch comprising
a first electrode (11; 21),
a second electrode (13; 23) mounted to said first electrode (11; 21) and having a projection (13A; 23A) formed thereon,
an insulating member (12; 22) mounted to insulate said first and second electrodes (11, 13; 21, 23) from each other, and
a conductive movable member (15; 25) contained within a housing which is comprised of said first and second electrodes (11, 13; 21, 23) and said insulating member (12; 22).

2. The switch of claim 1, wherein said projection (13A; 23A) formed on the second electrode (13; 23) has a concave surface (13A1) .
